(19) Europäisches Patentamt
European Patent Office
Office européen des brevets

(11) Veröffentlichungsnummer: **0 031 477**
**B1**

(12) # EUROPÄISCHE PATENTSCHRIFT

(45) Veröffentlichungstag der Patentschrift: **19.09.84**

(51) Int. Cl.³: **C 08 B 31/12**

(21) Anmeldenummer: **80107545.8**

(22) Anmeldetag: **03.12.80**

(54) **Verfahren zur Herstellung kationischer Stärkeäther.**

(30) Priorität: **12.12.79 DE 2949886**

(43) Veröffentlichungstag der Anmeldung: **08.07.81 Patentblatt 81/27**

(45) Bekanntmachung des Hinweises auf die Patenterteilung: **19.09.84 Patentblatt 84/38**

(84) Benannte Vertragsstaaten: **AT DE FR GB NL SE**

(56) Entgegenhaltungen:
**US - A - 2 917 506**
**US - A - 2 970 140**
**US - A - 3 624 070**
**US - A - 3 854 970**
**US - A - 4 127 563**

**Die Akte enthält technische Angaben, die nach dem Eingang der Anmeldung eingereicht wurden und die nicht in dieser Patentschrift enthalten sind.**

(73) Patentinhaber: **Degussa Aktiengesellschaft, Weissfrauenstrasse 9, D-6000 Frankfurt am Main 1 (DE)**

(72) Erfinder: **Fischer, Wolfgang, Hanauer Landstrasse 20, D-8756 Kahl (DE)**
Erfinder: **Langer, Manfred, Dr., Stifterstrasse 30, D-8757 Karlstein 1 (DE)**
Erfinder: **Pohl, Gerhard, Dr., Fürstenbergstrasse 10, D-6450 Hanau 9 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die Erfindung betrifft ein Verfahren zur Herstellung kationischer Stärkeäther durch Umsetzung von Stärke mit Alkylidenepoxiden in alkalischem Medium in Gegenwart von Wasser.

Es ist bekannt, Stärke oder Stärke enthaltende Substanzen durch Umsetzung mit kationischen Verätherungsmitteln zu kationisieren. Die Umsetzung wird insbesondere in Gegenwart nur geringer Mengen Wasser bei Raumtemperatur oder bis auf 200° C erhöhter Temperatur mit Alkylidenepoxiden, die eine tertiäre Aminogruppe oder eine quartäre Ammoniumgruppe aufweisen (US-PS 3 422 087; US-PS 3 448 101), oder in Gegenwart nur geringer Mengen Wasser unter Zusatz von gegebenenfalls halogenierten Kohlenwasserstoffen und unter Zusatz stark alkalisch wirkender Substanzen bei Temperaturen von 30 bis 80° C mit halogenierten tertiären Aminen oder quartären Ammoniumsalzen oder Alkylidenepoxiden, die eine tertiäre Aminogruppe oder eine quartäre Ammoniumgruppe aufweisen (US-PS 3 243 426), oder in Gegenwart größerer Mengen Wasser unter Zusatz stark alkalisch wirkender Substanzen bei Raumtemperatur oder wenig erhöhter Temperatur mit Alkylidenepoxiden oder Alkylidenhalogenhydrinen, die eine quartäre Ammoniumgruppe aufweisen (US-PS 2 876 217; US-PS 3 346 563), durchgeführt. Bei allen bekannten Verfahren sind die Ausbeuten an verätherter Stärke, bezogen auf das eingesetzte Verätherungsmittel, unbefriedigend.

Es wurde nun ein Verfahren zur Herstellung kationischer Stärkeäther durch Umsetzung von Stärke mit Alkylidenepoxiden in alkalischem Medium von Wasser gefunden, das dadurch gekennzeichnet ist, daß die Stärke bei Temperaturen von 50 bis 120° C mit Alkylidenepoxiden umgesetzt wird, die eine tertiäre Aminogruppe oder eine quartäre Ammoniumgruppe aufweisen, und die Umsetzung in einem Medium erfolgt, das 10 bis 35 Gewichtsprozent Wasser und 0,2 bis 2,0 Gewichtsprozent Calciumhydroxid oder Calciumoxid enthält. Bei diesem Verfahren werden bei wesentlich kürzerer Umsetzungszeit günstigere Ausbeuten als bei den bekannten Verfahren erzielt.

Zur Herstellung kationischer Stärkeäther nach dem erfindungsgemäßen Verfahren können native oder modifizierte Stärke oder Stärke enthaltende Substanzen beliebiger Herkunft eingesetzt werden. Mit besonderem Vorteil wird native Weizen-, Mais- oder Kartoffelstärke verwendet.

Erfindungsgemäß erfolgt die Verätherung der Stärke mit Alkylidenepoxiden der allgemeinen Formel

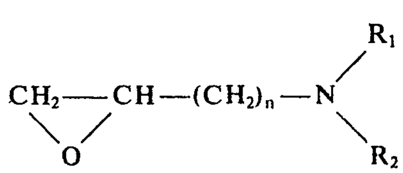 (I)

oder vorzugsweise

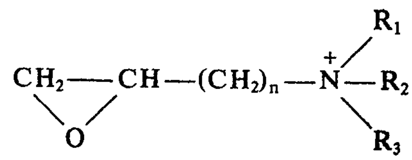 (II)

in der n eine Zahl von 1 bis 3 ist und $R_1$, $R_2$ und $R_3$ gleiche oder verschiedene niedere Alkylrest mit 1 bis 4 Kohlenstoffatomen bedeuten.

Im allgemeinen ist es zweckmäßig, je Mol Stärke, berechnet als Anhydroglukoseeinheit in der Trockensubstanz, etwa 0,005 bis 0,5 Mol Epoxid, vorzugsweise 0,01 bis 0,3 Mol Epoxid, anzuwenden.

Erfindungsgemäß wird die Verätherung der Stärke mit den Alkylidenepoxiden in einem Medium vorgenommen, das 10 bis 35 Gewichtsprozent, insbesondere 15 bis 25 Gewichtsprozent, Wasser und 0,2 bis 2,0 Gewichtsprozent, insbesondere 0,4 bis 1,5 Gewichtsprozent, Calciumoxid oder vorzugsweise Calciumhydroxid enthält.

Die Stärke kann in der handelsüblichen Form, in der sie im allgemeinen bis zu etwa 20 Gewichtsprozent Wasser enthält, verwendet werden. Mit Vorteil wird das Calciumhydroxid oder Calciumoxid als Feststoff in trockenem Zustand zugegeben und das Epoxid als wäßrige Lösung eingesetzt. Es kann hierbei zunächst das Calciumhydroxid oder Calciumoxid der Stärke zugemischt und dann die Epoxidlösung zugegeben werden oder umgekehrt zunächst die Stärke mit der Epoxidlösung versetzt und dann das Calciumhydroxid oder Calciumoxid zugemischt werden. Die Epoxidlösung wird zweckmäßigerweise fein verteilt zugegeben, vorzugsweise aufgesprüht. Das bei der Herstellung des Epoxids durch Umsetzung des entsprechenden Halogenhydrins mit alkalisch wirkenden Substanzen, wie Alkalihydroxid, anfallende Umsetzungsgemisch kann unmittelbar angewendet werden.

Die Umsetzungstemperatur richtet sich gegebenenfalls in gewissem Umfang nach der Art der umzusetzenden Substanzen. Es werden Temperaturen von 50 bis 120° C angewendet. Zu bevorzugen sind Temperaturen von 50 bis 90° C. Der Druck kann beliebig gewählt werden, sofern nicht die Flüchtigkeit der Substanzen die Einhaltung bestimmter Mindestdrücke erfordert. In manchen Fällen jedoch kann es vorteilhaft sein, den Wassergehalt des Umsetzungsgemischs während der Umsetzung durch Verdampfen zu verringern und hierzu unter geringem Unterdruck zu arbeiten.

In den folgenden Beispielen bedeuten Prozentangaben Gewichtsprozente.

Beispiel 1

1227 g (6,17 Mol) native Kartoffelstärke (Wassergehalt 18,5%, Gehalt an unlöslichem Stick

stoff 0,002%) wurden im Verlauf von 10 Minuten mit einer Lösung von 49,0 g (entsprechend 0,31 Mol) eines handelsüblichen Glycidyltrimethylammoniumchlorids (Gehalt an Glycidyltrimethylammoniumchlorid 92,5% und an 3-Chlor-2-hydroxypropyltrimethylammoniumchlorid 3,5%) in 49 ml Wasser besprüht. Die Stärke wurde währenddessen und in der Folgezeit ständig intensiv gerührt. 10 Minuten nach der Zugabe der Glycidyltrimethylammoniumchlorid-Lösung wurden im Verlauf von 5 Minuten 10,5 g gepulvertes chemisch reines Calciumhydroxid zugemischt. Dann wurde auf 80°C erwärmt. 30 beziehungsweise 45 Minuten später wurden Proben von je 20 g entnommen. Die Proben wurden in je 150 g Wasser aufgeschlämmt und mit verdünnter Chlorwasserstoffsäure auf pH 5 angesäuert. Der Feststoff wurde abfiltriert, zweimal mit je 150 ml Wasser gewaschen und unter Unterdruck bei 70°C getrocknet. Die Ausbeute, bezogen auf eingesetztes Glycidyltrimethylammoniumchlorid, betrug bei der nach 30 Minuten entnommenen Probe 91% und bei der nach 45 Minuten entnommenen Probe 93%, berechnet nach dem Stickstoffgehalt des gewonnenen Stärkeäthers unter Berücksichtigung des Gehalts an unlöslichem Stickstoff in der eingesetzten Stärke. Der Substitutionsgrad des gewonnenen kationischen Stärkeäthers war 0,0455 beziehungsweise 0,0465.

Beispiel 2

1000 g (5,33 Mol) native Maisstärke (Wassergehalt 13,5%, Gehalt an unlöslichem Stickstoff 0,03%) wurden innerhalb von 5 Minuten mit 10,5 g gepulvertem chemisch reinem Calciumhydroxid versetzt. Während der Zugabe des Calciumhydroxids und in der Folge wurde die Stärke ständig intensiv gerührt. Weiter wurden nacheinander im Verlauf von je 5 Minuten 135 g Wasser und eine Lösung von 42,5 g (entsprechend 0,27 Mol) eines handelsüblichen Glycidyltrimethylammoniumchlorids (Gehalt an Glycidyltrimethylammoniumchlorid 92,5% und an 3-Chlor-2-hydroxypropyltrimethylammoniumchlorid 3,5%) in 42,5 g Wasser aufgesprüht. Das Gemisch wurde auf 80°C erwärmt und 45 Minuten lang auf dieser Temperatur gehalten. Der Druck wurde währenddessen zwecks Verdampfung von Wasser auf 600 mbar gehalten. Die Ausbeute betrug 88%, bezogen auf eingesetztes Glycidyltrimethylammoniumchlorid. Der Substitutionsgrad war 0,044.

Beispiel 3

Es wurde wie nach Beispiel 2 verfahren, jedoch wurden 1129 g (6,17 Mol) native Weizenstärke (Wassergehalt 11,4%, Gehalt an unlöslichem Stickstoff 0,035%), 10,5 g Calciumhydroxid und ein Umsetzungsprodukt aus 102,3 g (0,31 Mol) 3-Chlor-2-hydroxypropyltrimethylammoniumchlorid in 56,7prozentiger wäßriger Lösung mit 12,5 g (0,31 Mol) Natriumhydroxid in 175 ml Wasser eingesetzt. Die Ausbeute betrug 85%, der Substitutionsgrad war 0,0425.

Beispiel 4

Es wurde wie nach Beispiel 2 verfahren, jedoch wurden nur 5,3 g Calciumhydroxid angewendet. Das Gemisch wurde nach Zugabe des Glycidyltrimethylammoniumchlorids 90 Minuten lang auf 80°C gehalten. Die Ausbeute betrug 85%, der Substitutionsgrad war 0,0425.

Beispiel 5

1227 g (6,17 Mol) native Kartoffelstärke gemäß Beispiel 1 wurden mit 10,5 g Calciumhydroxid vermischt. Das Gemisch wurde mit der Lösung von Glycidyltrimethylammoniumchlorid gemäß Beispiel 1 besprüht. Im übrigen wurde wie nach Beispiel 1 verfahren, jedoch betrug die Umsetzungstemperatur 60°C. Nach 60 Minuten war die Ausbeute 83% und der Substitutionsgrad 0,0415; nach 90 Minuten war die Ausbeute 87% und der Substitutionsgrad 0,0435.

Beispiel 6

Es wurde wie nach Beispiel 2 verfahren, jedoch wurden 1156 g (6,17 g Mol) der nativen Maisstärke mit 10,5 g Calciumhydroxid vermischt. Das Gemisch wurde mit einer Lösung von Glycidyltrimethylammoniumchlorid, die durch Vermischen einer wäßrigen Lösung von 409 g (1,23 Mol) 3-Chlor-2-hydroxypropyltrimethylammoniumchlorid mit einer Lösung von 49,7 (1,23 Mol) Natriumhydroxid in 140 ml Wasser bereitet worden war, besprüht. Nach 90 Minuten Umsetzungszeit war die Ausbeute 82% und der Substitutionsgrad 0,164.

**Patentanspruch**

Verfahren zur Herstellung kationischer Stärkeäther durch Umsetzung von Stärke mit Alkylidenepoxiden in alkalischem Medium in Gegenwart von Wasser, dadurch gekennzeichnet, daß die Stärke bei Temperaturen von 50 bis 120°C mit Alkylidenepoxiden umgesetzt wird, die eine tertiäre Aminogruppe oder eine quartäre Ammoniumgruppe aufweisen, und die Umsetzung in einem Medium erfolgt, das 10 bis 35 Gewichtsprozent Wasser und 0,2 bis 2,0 Gewichtsprozent Calciumhydroxid oder Calciumoxid enthält.

**Claim**

A process for the production of cationic starch ethers by the reaction of starch with alkylidene epoxides in an alkaline medium in the presence

of water, characterised in that the starch is reacted at a temperature of from 50 to 120°C with alkylidene epoxides which have a tertiary amino group or a quaternary ammonium group, and the reaction takes place in a medium which contains from 10 to 35% by weight of water and from 0.2 to 2.0% by weight of calcium hydroxide or calcium oxide.

**Revendication**

Procédé pour la fabrication d'éther cationique de l'amidon par réaction d'amidon avec des alkylidènépoxydes en milieu alcalin, en présence d'eau, caractérisé en ce que l'on fait réagir l'amidon, à une température de 50 à 120°C, avec des alkylidénépoxydes qui comportent un groupe amino tertiaire ou un groupe ammonium quaternaire, et que la réaction s'effectue dans un milieu qui contient de 10 à 35% en poids d'eau et 0,2 à 2 pour cent en poids d'hydroxyde de calcium ou d'oxyde de calcium.